(19) Europäisches Patentamt
European Patent Office
Office européen des brevets

(11) EP 4 252 888 A1

# (12) EUROPEAN PATENT APPLICATION

(43) Date of publication:
**04.10.2023 Bulletin 2023/40**

(21) Application number: **22166046.7**

(22) Date of filing: **31.03.2022**

(51) International Patent Classification (IPC):
***B01D 53/14*** *(2006.01)* ***B01D 53/96*** *(2006.01)*

(52) Cooperative Patent Classification (CPC):
**B01D 53/1493; B01D 53/1475; B01D 53/62; B01D 53/965;** B01D 2251/304; B01D 2251/306; B01D 2252/204; B01D 2252/20484; B01D 2257/504; B01D 2258/0283

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Estech A/S**
**5700 Svendborg (DK)**

(72) Inventors:
- **Jakobsen, Jan Stougaard**
**5700 Svendborg (DK)**
- **Bonde, Jacob Lindner**
**Svendborg (DK)**

(74) Representative: **Dragsted Partners A/S**
**Rådhuspladsen 16**
**1550 Copenhagen V (DK)**

## (54) ELECTROLYTIC REGENERATION OF AMINE BASED CO2 ABSORBENT

(57) A method of scrubbing a gas, comprising carbon dioxide to deplete the gas of carbon dioxide ($CO_2$), the method comprising the steps of scrubbing the gas in a scrubber (210) with a first alkaline, aqueous scrubbing liquid to dissolve carbon dioxide ($CO_2$) as hydrogen carbonate ($HCO_3^-$) and/or as carbonate ($CO_3^{2-}$) in the first alkaline, aqueous scrubbing liquid, thereby providing a first spent aqueous scrubbing liquid comprising hydrogen carbonate ($HCO_3^-$) and/or carbonate ($CO_3^{2-}$), feeding the first spent aqueous scrubbing liquid to an electrolytic cell (310) comprising an anode chamber (313) and a cathode chamber (312); regenerating the first spent aqueous scrubbing liquid in the electrolytic cell (310) by electrolysis, depleting the first spent aqueous scrubbing liquid of hydrogen carbonate ($HCO_3^-$) and of carbonate ($CO_3^{2-}$) in the anode chamber (313, the regeneration further comprising generating gaseous hydrogen in the cathode chamber (312) and a gaseous mixture of oxygen and carbon dioxide ($CO_2$) in the anode chamber (313) by electrolysis; and withdrawing regenerated alkaline, aqueous scrubbing liquid from the cathode chamber (312) and re-circulating it to the scrubber (210); wherein carbon dioxide ($CO_2$) and/or oxygen ($O_2$) withdrawn from the anode chamber (313) is compressed into liquid carbon dioxide and compressed oxygen ($O_2$), in a compression unit (330), wherein the method further comprises a step of separating the liquid carbon dioxide from gaseous oxygen, in a gas separator (340), into a first stream (S1) comprising carbon dioxide, and a secondary stream (S2) comprising oxygen containing less than 30% carbon dioxide, wherein said secondary stream (S2) is introduced into at least a portion of said first spent aqueous scrubbing liquid, prior to feeding said first spent aqueous scrubbing liquid into the anode chamber of the electrolytic cell (310).

100
200
210
214
211'
211''
213
320
380
310
312''
313''
312
311
313
312'
313'
400
S2
S
300
395
340
S1
S2
330
S2'

Fig. 2

EP 4 252 888 A1

## Description

### Technical field

The present invention relates to a method of increasing the uptake of carbon dioxide ($CO_2$) in an electrolytic regeneration process of spent scrubbing liquid from a scrubbing process where a gas, such as flue gas or exhaustive gas, is depleted of $CO_2$. Further, the present invention relates to a system for such increased uptake of $CO_2$ from the spent scrubbing liquid in a regeneration process.

### Background

Carbon dioxide ($CO_2$) is a gas that when emitted into the atmosphere is damaging to the climate as it contributes to the green-house effect and rise in global temperature. It is for example produced as a byproduct when fossil fuel, e.g. coal, gasoline or diesel, is burned. Coal- and gas-fired power plants accounts for a large share of $CO_2$ emissions. It is a goal for many sectors to lower carbon dioxide emissions.

Emitted gases resulting from combustion and comprising $CO_2$ are typically denoted flue gases or exhaust gases. Depleting such emitted gases of $CO_2$ by lowering the $CO_2$ content in the emitted gases, can be done by so called scrubbing of the gases, i.e. removing the $CO_2$ from the gas stream by absorbing/dissolving $CO_2$ in a liquid. The primary application for $CO_2$ scrubbing is for removal of $CO_2$ from the exhaust (i.e. flue gas) of coal- and gas-fired power plants, downstream of a power station, before the gas is released into the atmosphere. By using such a process, it would be possible to significantly lower the $CO_2$ emissions involved in coal-fired power generation. In the chemical industry, $CO_2$ scrubbing is used to separate $CO_2$ from natural gas, for use in, for example, the beverage or fertilizer sector.

Through direct air capture (DAC), carbon dioxide from ambient air is collected, i.e. the air is purified from carbon dioxide, which can be compressed for further downstream applications or storage, for instance underground.

In a $CO_2$-scrubbing system, a scrubbing solution takes up the carbon dioxide from the flue gas, at low temperatures, in an absorber.

In US11219860 a process for such carbon capture is disclosed, where the spent scrubbing liquid is regenerated in an electrolytic process. The regeneration process generates a regenerated alkaline, aqueous scrubbing liquid from the cathode chamber which re-circulates it to the scrubber and a stream of gaseous mixture of carbon dioxide and oxygen from the anode chamber. The gaseous mixture from the anode chamber may be compressed and cooled into a pure liquid carbon dioxide, which may be used for downstream applications, and some of the $CO_2$ is conventionally released into the ambient surroundings as an off gas also containing as a majority, oxygen.

There is an imperative need for improved scrubbing systems that increases the efficiency of the overall carbon capture.

### Summary

It is in view of the above considerations and others that the embodiments described in this disclosure have been made.

It is an object of the present disclosure, to provide an improved method of increasing the uptake of carbon dioxide ($CO_2$) in an electrolytic regeneration process, and a system therefore.

The invention is defined by the appended independent claims. Embodiments are set forth in the appended dependent claims and in the following description.

According to a first aspect, provided a method of scrubbing a gas, comprising carbon dioxide to deplete the gas of carbon dioxide ($CO_2$), the method comprising the steps of scrubbing the gas in a scrubber with a first alkaline, aqueous scrubbing liquid to dissolve carbon dioxide as hydrogen carbonate ($HCO_3^-$) and/or as carbonate ($CO_3^{2-}$) in the first alkaline, aqueous scrubbing liquid, thereby providing a first spent aqueous scrubbing liquid comprising hydrogen carbonate ($HCO_3^-$) and/or carbonate ($CO_3^{2-}$), feeding the first spent aqueous scrubbing liquid to an electrolytic cell (310) comprising an anode chamber (313) and a cathode chamber (312); regenerating the first spent aqueous scrubbing liquid in the electrolytic cell (310) by electrolysis, depleting the first spent aqueous scrubbing liquid of hydrogen carbonate ($HCO_3^-$) and of carbonate ($CO_3^{2-}$) in the anode chamber (313, the regeneration further comprising generating gaseous hydrogen in the cathode chamber (312) and a gaseous mixture of oxygen and carbon dioxide ($CO_2$) in the anode chamber (313) by electrolysis; and withdrawing regenerated alkaline, aqueous scrubbing liquid from the cathode chamber and re-circulating it to the scrubber, wherein carbon dioxide ($CO_2$) and/or oxygen ($O_2$) withdrawn from the anode chamber is compressed into liquid carbon dioxide and compressed oxygen ($O_2$), in a compression unit, wherein the method further comprises a step of separating the liquid carbon dioxide from gaseous oxygen, in a gas separator, into a first stream comprising carbon dioxide, and a secondary stream comprising oxygen containing less than 30% carbon dioxide, wherein said secondary stream is introduced into at least a portion of said first spent aqueous scrubbing liquid, prior to feeding said first spent aqueous scrubbing liquid into the anode chamber of the electrolytic cell.

Conventionally the secondary stream contains about 20 % carbon dioxide and about 80 % oxygen.

The spent scrubbing liquid from the first stage of scrubbing is fed to the electrolytic cell to be regenerated.

In electrolysis, water is converted into oxygen and hydronium ions ($H_3O^+$) at the anode, whereas water is converted into hydrogen and hydroxide ions ($OH^-$) at the cathode. The electrolysis thus increases the pH of the first spent aqueous scrubbing liquid in the cathode chamber and depletes the first spent aqueous scrubbing liquid of hydrogen carbonate ($HCO_3^-$) and of carbonate ($CO_3^{2-}$) in the anode chamber, by decreasing the pH to shift the equilibrium towards carbonic acid in turn shifted into carbon dioxide. The regeneration further comprises generating gaseous hydrogen in the cathode chamber and a gaseous mixture of oxygen and carbon dioxide in the anode chamber by electrolysis. The chemical reactions and description of the operation of the processes are further described in the Detailed Description herein further below.

The method further comprises the step of withdrawing regenerated alkaline, aqueous scrubbing liquid from the cathode chamber and re-circulating it to the scrubber.

Further, the regeneration, as already explained, also generates carbon dioxide and hydrogen, which may be used downstream for synthesis of organic compounds, such as methanol, thus adding further value to the process. The process is ideal for processes such as downstream Power-to-X processes, and hence there is a need to increase the overall carbon capture of the scrubbing process.

The gaseous hydrogen is withdrawn from the cathode chamber and the gaseous mixture of oxygen and carbon dioxide is withdrawn from the anode chamber.

Withdrawing hydrogen, oxygen and carbon dioxide from the regeneration process is advantageous as hydrogen and oxygen can be used to generate electricity, e.g. by a fuel cell, to operate the process partly. Further, hydrogen and carbon dioxide ($CO_2$) can be used for synthesis of organic compounds, e.g. methanol, thereby compensating for the cost of running the process.

The gaseous mixture of oxygen and carbon dioxide may be compressed, in a first compression unit, to provide for, in a separation unit, a separation of liquid carbon dioxide ($CO_2$) from gaseous ($O_2$).

The method thus comprises a step of separating this gaseous mixture of oxygen and carbon dioxide into a first stream, rich in carbon dioxide and depleted of oxygen, and a second stream, a secondary gas stream or an "off gas", rich in oxygen with a carbon dioxide content in the range of 5 to 25%, where both streams are compressed and cooled

According to the method this second stream, or off gas, which is compressed and cooled, is mixed with the spent aqueous scrubbing liquid, prior to its introduction into the electrolytic cell.

The carbon capture reaction in the scrubbing step takes place automatically. The operation of the scrubber is thereby an automatic process and requires no power apart from one needed to circulate the liquids.

The regeneration process that takes place in the cathode and anode chambers of the electrolytic cell are electrochemical reactions, which inherently require electrical power. The electrochemical process regenerates the solvent, produces hydrogen at the cathode and a mixture of carbon dioxide ($CO_2$) and oxygen at the anode. According to the method as described above, during regenerating the pH of the scrubbing liquid is increased. In order to dissolve carbon dioxide and shift the equilibrium towards hydrogen carbonate ($HCO_3^-$) and of carbonate ($CO_3^{2-}$), the first aqueous scrubbing liquid needs to be alkaline, i.e. have a pH exceeding 7, such as 8 or higher. According to the inventive method, by introducing, the $CO_2$ from the off gas into the first spent aqueous scrubbing liquid will optimize the pH of the scrubbing liquid and thus the energy used in the electrolytic cell can be optimized. The introduction of additional $CO_2$ in the spent scrubbing liquid will hence drive potential carbonate ($CO_3^{2-}$) to ($HCO_3^-$), and make the overall scrubbing process more efficient, as the $CO_2$ which would otherwise be lost into the ambient air in the "off-gas" is reintroduced into the system.

The actual power consumption will depend on the technical implementation of the process. Overall, the process requires a large amount of electrical energy rather than heat. This is positive, as electrification of the regeneration in carbon capture processes is highly desired. Further, some of the energy may be recovered as heat for district heating.

This will reduce the amount of CO2 in the "off gas" and introduces a higher carbon loading in the first spent aqueous scrubbing liquid before, or simultaneously with, introducing it to the electrolytic cell system. The secondary gas stream or "off gas" is pressurized and cooled which will enhance the $CO_2$-uptake in the first spent aqueous scrubbing liquid. The introduction of the "off gas" to the first spent aqueous scrubbing liquid will be in a vessel suitable for pressurization such as the first spent aqueous liquid will be pressurized and cooled by the introduction of the off gas.

The gas to be depleted of carbon dioxide may be any one of a flue gas, exhaustive gas or ambient air.

The pH of the first spent aqueous liquid may be in the range of 8 to 11 before the introduction of the second stream of gas and wherein said introduction increases a carbon load of said spent aqueous liquid by between 2 and 10 %, or by between 3 and 7 %, or by between 4 and 6%.

By increasing the carbon load, by at least 2%, and most preferably around 5 %, or 5,5 % in the spent aqueous liquid, the amount of carbon in the gaseous mixture withdrawn from the electrolyser cell is increased, which in turn reduces the energy needed to compress the gas. In a further aspect, the increased carbon loading of the system is also leads to a reduction in the amount of scrubbing liquid needed in the scrubbing system, which leads to a reduction of the size required for the scrubber. By increasing the loading with about 5% less scrubbing liquid is needed and a 10 to 20% save of the scrubber sizing can be achieved. It has been shown that a substantial energy and cost reduction can be achieved by using less scrubbing liquid.

The first spent aqueous scrubbing liquid may be separated into at least two streams after leaving said scrubber, and wherein said second stream of compressed gas comprising oxygen containing less than 30% carbon dioxide is introduced at least one of these first spent aqueous scrubbing liquid streams, and wherein at least another first spent aqueous scrubbing liquid stream is fed directly into the electrolytic cell.

According to a second aspect there is provided a system for scrubbing a gas, such as flue gas or exhaustive gas, comprising carbon dioxide to deplete the flue gas of carbon dioxide, the system comprising, a scrubber arrangement for scrubbing a gas with an alkaline, aqueous scrubbing liquid to dissolve carbon dioxide as hydrogen carbonate ($HCO_3^-$) and/or as carbonate ($CO_3^{2-}$) in the alkaline, aqueous scrubbing liquid; and a regeneration arrangement for regenerating spent aqueous scrubbing liquid by electrolysis, wherein, the scrubber arrangement comprises a scrubber, the scrubber having an inlet for the gas to be scrubbed and an outlet for gas depleted of carbon dioxide, the scrubber further having an inlet for receiving the alkaline, aqueous scrubbing liquid and an outlet for withdrawing spent aqueous scrubbing liquid; and the regeneration arrangement comprises an electrolytic cell, comprising an anode chamber and a cathode camber, the anode chamber comprising an anode inlet for receiving the spent aqueous scrubbing liquid and an anode outlet for withdrawing oxygen and carbon dioxide, and the cathode chamber comprising an outlet for withdrawing regenerated aqueous scrubbing liquid and hydrogen, wherein the outlet for spent aqueous scrubbing liquid of the scrubber is in flow communication with the inlet for the spent aqueous scrubbing liquid of the anode chamber, and the outlet for regenerated aqueous scrubbing liquid of the cathode chamber is flow communication with the inlet for the alkaline, aqueous scrubbing liquid of the scrubber, wherein said regeneration arrangement further comprises, a first compressor unit for compressing oxygen and carbon dioxide withdrawn from the anode chamber, wherein the regeneration arrangement further comprises, a gas separator for separating oxygen and carbon dioxide withdrawn from the anode chamber, into a first stream of liquefied carbon dioxide stream and a secondary stream comprising a compressed gaseous oxygen containing less than 30% carbon dioxide, wherein said gas separator is in a flow connection with at least a portion of a spent aqueous scrubbing liquid.

According to the second aspect the system may further comprise a mixing zone for introducing said compressed second stream into said spent aqueous scrubbing liquid, prior to or simultaneously with, feeding said spent aqueous scrubbing liquid to said electrolytic cell.

Alternatively, the system may further comprise a second compressor unit for further compressing at least a portion of the second stream of gaseous oxygen comprising less than 30% carbon dioxide.

The mixing zone may comprise a vessel adapted to be pressurized and arranged between said outlet for spent aqueous scrubbing liquid of the scrubber and the inlet for the spent aqueous scrubbing liquid of the anode chamber, wherein said vessel is in flow communication with said gas separator for separating oxygen and carbon dioxide, and/or with said second compressor, and with said scrubber outlet and said anode inlet.

According to the system of the second aspect the mixing zone may be arranged at the anode inlet, wherein said gas separator for separating oxygen and carbon dioxide, and/or said second compressor unit, further is in flow communication with said anode inlet.

According to a third aspect there is provided a regeneration arrangement for regenerating a spent aqueous scrubbing liquid comprising hydrogen carbonate ($HCO_3^-$) and/or carbonate ($CO_3^{2-}$) used in electrolysis to provide alkaline, aqueous scrubbing liquid, the regeneration arrangement comprising an electrolytic cell, comprising an anode chamber and a cathode chamber separated by a membrane, wherein the anode chamber comprises an anode inlet for receiving the spent aqueous scrubbing liquid and an anode outlet for withdrawing oxygen and carbon dioxide, and the cathode chamber comprises an outlet for withdrawing regenerated aqueous scrubbing liquid and hydrogen; wherein said regeneration arrangement further comprises, a first compressor unit for compressing oxygen and carbon dioxide withdrawn from the anode chamber, a gas separator for separating oxygen and carbon dioxide withdrawn from the anode chamber, into a first stream of liquefied carbon dioxide and a secondary stream of gaseous oxygen containing less than 30% carbon dioxide, wherein said gas separator is in flow connection with a stream of said first spent aqueous scrubbing liquid.

This means that the secondary stream of cooled and compressed off gas is in flow connection with the first spent aqueous scrubbing liquid.

The regeneration arrangement may further comprise a mixing zone for introducing said compressed secondary stream into said spent aqueous scrubbing liquid prior to or simultaneously with feeding said spent aqueous scrubbing liquid to said electrolytic cell.

The arrangement may further comprise a second compressor unit for further compressing the secondary stream of comprising gaseous oxygen containing less than 30% carbon dioxide.

The mixing zone may comprise a vessel adapted to be pressurized and which is arranged between an outlet for spent aqueous scrubbing liquid of the scrubber and the inlet for the spent aqueous scrubbing liquid of the anode chamber, wherein said vessel is in flow communication with said gas separator for separating oxygen and carbon dioxide, and/or said second compressor unit, and with said scrubber outlet and said anode inlet.

The said mixing zone may be arranged at the inlet of the anode chamber, and wherein said gas separator for separating oxygen and carbon dioxide, and/or said second compressor unit further is in flow communication with said anode inlet.

The higher partial pressure of $CO_2$ in the gas and the lower temperature of the liquid will enhance the $CO_2$ uptake into the liquid and the first spent aqueous scrubbing liquid will absorb $CO_2$ from the "off gas" and at the same time be pressurized before introduced to the electrolyser.

The introduction of the additional carbon dioxide, i.e. an increased carbon loading, in the first spent scrubbing liquid drive the potential carbonate $CO_3^{2-}$ to $HCO_3^-$ and hence lower the pH value of the first spent scrubbing liquid before it enters the electrolytic cell. A lowered pH will increase the efficiency of the electrolytic cell unit for the $CO_2$-release and make the overall carbon capture more efficient.

Another advantage is that the first scrubbing liquid will have an increased pressure, when it enters the electrolytic cell unit, and this will lead to the electrolytic cell being operated at a higher pressure, which will enhance the energy efficiency of the electrolyser system, in turn the increased or higher pressure will also lead to a reduced energy consumption for the $CO_2$/$O_2$-separation of the gaseous mixture withdrawn from the anode chamber, as well as for the $H_2$ pressurization of the gas withdrawn from the cathode chamber, because the starting pressure for these unit operations will be higher than ambient pressure.

According to a second aspect, there is in corresponding manner provided a system for scrubbing a gas, such as flue gas or exhaustive gas, comprising carbon dioxide to deplete the flue gas of carbon dioxide.

Typically, the first gas separator is arranged downstream the second compressor unit to provide a first stream of a liquid carbon dioxide and a second stream, or "off gas", i.e. a secondary gas stream, comprising a gaseous oxygen containing less than 30% carbon dioxide, or preferably less than 25% carbon dioxide. Preferably the carbon dioxide content in the second stream or gas is in the range of 5 to 25 %.

The regeneration arrangement may further comprise a second compressor unit 395 for compressing and cooling the secondary gas stream.

The regeneration arrangement comprises a mixing zone, where the second stream or off gas is mixed with the first spent aqueous scrubbing liquid.

The mixing zone may be vessel or tank adapted for pressurization, into which the first spent aqueous liquid is introduced and mixed with the second stream of cooled and compressed [pressurized] off gas. The vessel is thus in flow communication with both the outlet for spent aqueous scrubbing liquid of the scrubber and with the inlet for the spent aqueous scrubbing liquid of the anode chamber, as well as the second compression unit.

Alternatively, the mixing zone is arranged at the inlet of the anode chamber. This means that there may be a combined inlet for the secondary gas and the spent aqueous liquid, such that the mixing occurs in a zone close to the inlet, or that the spent aqueous liquid and secondary stream of gas are fed into the anode chamber separately such that the mixing occurs within the anode chamber.

Although the present invention has been described above with reference to specific embodiments, it is not intended to be limited to the specific form set forth herein. Rather, the invention is limited only by the accompanying claims and other embodiments than the specific embodiments described above are equally possible within the scope of these appended claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

## BRIEF DESCRIPTION OF THE DRAWINGS

These and other aspects, features and advantages of which the invention is capable of will be apparent and elucidated from the following description of embodiments of the present invention, reference being made to the accompanying drawings, in which:

**Fig. 1** shows a schematic flow path between a scrubber and an electrolytic cell;
**Fig. 2** shows a process scheme of a system for scrubbing flue gas;

## DETAILED DESCRIPTION

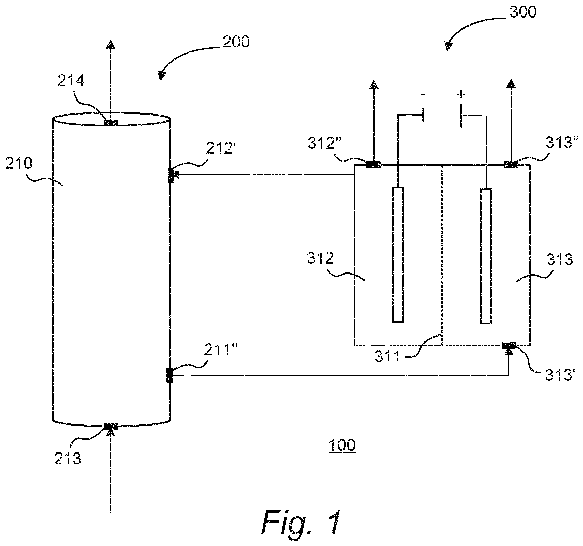

With reference to **Fig. 1**, a schematic overview of a system 100 according to an embodiment is illustrated having a scrubber arrangement 200 and a regeneration arrangement 300. Here, a method of scrubbing a gas, such as flue gas or an exhaustive gas, comprising carbon dioxide $CO_2$, is illustrated. The gas enters the scrubber through the scrubber inlet 213. To deplete the flue gas from carbon dioxide $CO_2$, the scrubbing method can be described as follows. The gas is scrubbed in the scrubber 210 in a counter flow manner with a first alkaline, aqueous scrubbing liquid to dissolve carbon dioxide $CO_2$ as hydrogen carbonate $HCO_3^-$ and/or as carbonate $CO_3^{2-}$in the first alkaline, aqueous scrubbing liquid. A first spent aqueous scrubbing liquid comprising dissolved hydrogen carbonate $HCO_3^-$ and/or carbonate $CO_3^{2-}$ results.

The first spent aqueous scrubbing liquid has a pH from about 7 to about 9 when it leaves at the outlet 211" for withdrawing spent aqueous scrubbing liquid of the scrubber 210.

The first spent aqueous scrubbing liquid is fed to an anode chamber 313 of an electrolytic cell, for regeneration of the liquid.

The electrolytic cell 310 has apart from the anode chamber 313 also a cathode chamber 312. The anode chamber 313 and the cathode chamber 312 are separated by a membrane 311. This membrane 311 may be semipermeable membrane, being permeable to cations, but essentially impermeable to anions. Thus, the membrane cation-exchange membrane. The electrolysis increases the hydroxide concentration of the first spent aqueous scrubbing liquid in the cathode chamber 312. In the anode chamber 313, the electrolysis further depletes the first spent aqueous scrubbing liquid of hydrogen carbonate $HCO_3^-$ and of carbonate $CO_3^{2-}$ by decreasing the pH-value to release gaseous carbon dioxide. The outlet 211" for spent aqueous scrubbing liquid of the scrubber 210 is in flow communication with the inlet 313' for the spent aqueous scrubbing liquid of the anode chamber 313. Moreover, the outlet 312" for regenerated aqueous scrubbing liquid of the cathode chamber 312 is flow communication with the inlet 212' for the alkaline, aqueous scrubbing liquid of the scrubber 210.

The first spent aqueous scrubbing liquid is regenerated by generating gaseous hydrogen $H_2$ and dissolved hydroxide ions $OH^-$ in the cathode chamber 312 and a gaseous mixture of oxygen $O_2$ and carbon dioxide $CO_2$ in the anode chamber 313 by electrolysis. This is indicated by the upwards pointing arrows from the cathode outlet 312" and the anode outlet 313" in **Fig. 1**, respectively. The gaseous hydrogen $H_2$ and dissolved hydroxide ions $OH^-$ is withdrawn from the cathode chamber 312 and the gaseous mixture of oxygen $O_2$ and carbon dioxide $CO_2$ is withdrawn from the anode chamber 313. For instance, the hydrogen $H_2$ may be used in downstream processes (not shown) such as in fuel or methanol production. The regenerated alkaline, aqueous scrubbing liquid from the cathode chamber 312 is then recirculated via the inlet 212' for receiving the alkaline, aqueous scrubbing liquid to the scrubber 210. Gas depleted of carbon dioxide $CO_2$ then exits the scrubber 210 via the scrubber outlet 214.

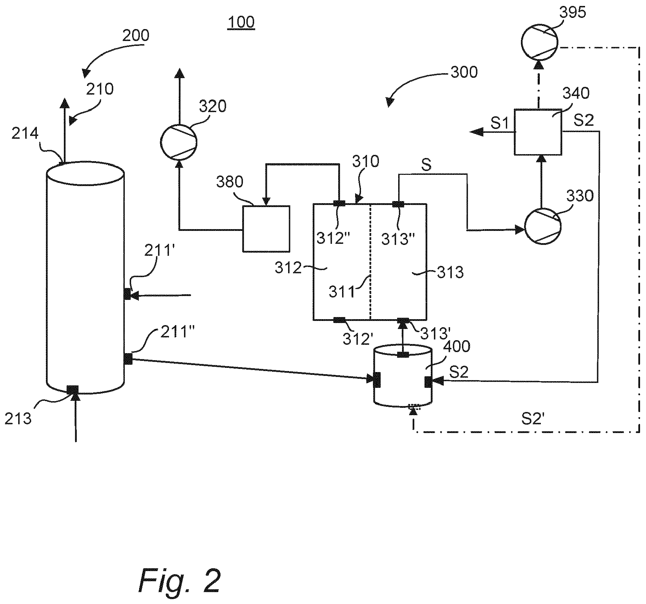

In **Fig. 2**, a detailed view of the system 100 described in relation to Fig. 1 is shown. The system is separated into two parts; the scrubber arrangement 200 and the regeneration arrangement 300. For increased understanding, the scrubber arrangement 200 and the regeneration arrangement 300 will now be described separately. Alternatively, the scrubber arrangement 200 and the regeneration arrangement 300, may be operated independently.

As illustrated in **Fig. 2** the gaseous mixture S of oxygen $O_2$ and carbon dioxide $CO_2$ withdrawn from the anode chamber 313 is fed to a first compression unit 330.

This means that when the system 100 is operating, the oxygen $O_2$ and carbon dioxide $CO_2$ leaving the first compression unit 330 are separated in the gas separator 340. The first gas separator 340 and the compression unit 330 may be integral, but are shown as individual units in the drawings.

The composition is then typically around 75% $CO_2$ and 25% $O_2$. They may for instance be compressed at about 50 bar at 10 °C where carbon dioxide $CO_2$ is liquefied and oxygen $O_2$ still is in gaseous phase. An advantage of keeping $CO_2$ in a liquid phase is that it is practical during transportation.

A separator 340 is present downstream of the compressor 330 to separate a first stream S1 of the liquefied carbon dioxide from a second stream S2 comprising oxygen and a minor amount of carbon dioxide. The oxygen in the second stream, i.e. a secondary stream or compressed and cooled so called "off gas" separated from the liquefied carbon dioxide contains less than 30% carbon dioxide or preferably less than 25% carbon dioxide. Conventionally the secondary stream contains between 5 and 25 % carbon dioxide.

The pH of the first spent aqueous liquid may be in the range of 8 to 11 before the introduction of the second stream of gas. By introducing the secondary stream S2 into the first spent aqueous liquid, the carbon load of said spent aqueous liquid is increased by at least 2%, preferably by at least 4 %, and more preferably by at least 5 %, or by between 2 and 10 %, or by between 3 and 7 %, or by between 4 and 6%.

By introducing the secondary stream S2 of cooled and compressed off gas into the first spent aqueous scrubbing liquid the pH of the liquid may be increased (or "boosted" to up to pH value of more than 10, which provides for a more efficient electrolytic process.

Further, by increasing the carbon load the amount of carbon dioxide in the gaseous mixture withdrawn from the electrolyser cell can be increased, which reduces the energy required for compressing the gaseous mixture.

The off gas may, in one alternative embodiment, be fed to a second compressor unit 395 where it is further compressed and cooled to a secondary stream S2', this is shown with dashed arrows in Fig. 2

The separator unit 340 is in fluid connection with the stream of the first spent aqueous scrubbing liquid, coming from the scrubber outlet 211".

At least a portion of the first spent aqueous scrubbing liquid may be fed to a tank or vessel suitable for pressurization 400, into which the secondary stream S2, or S2', of the cooled and compressed off gas, comprising oxygen containing less than 30% $CO_2$, is fed simultaneously during operation of the scrubbing and/or regeneration system. The vessel 400 then functions as a mixing zone for mixing the spent aqueous liquid and the compressed and cooled secondary off gas.

The tank or vessel 400 is further in flow communication with an anode chamber 313 of an electrolytic cell 310 via an anode inlet 313', to which the pressurized first spent aqueous scrubbing liquid is fed. Higher partial pressure the cold and compressed secondary gas, will enhance the $CO_2$ uptake into the liquid and the first spent aqueous scrubbing liquid will absorb $CO_2$ from the off gas and at the same time be pressurized before it is introduced into the anode chamber. The oxygen from the secondary stream may be vented out of the vessel 400. Removing the oxygen before the first spent aqueous liquid enters the electrolyzer is important, since otherwise the oxygen will be enriched in the electrolyzer, leading to among other effects that the energy needed for compression of the geaseous mixture coming out of the anode chamber will increase. That liquid leaving the pressurized vessel 400 will be pressurized as well which means that the electrolytic cell will be run at an elevated pressure which will enhance the energy efficiency of the electrolytic or electrolyser system. Furthermore, drawing the gasses (hydrogen and $CO_2/O_2$) out of the electrolyser system under pressurized conditions will have the effect that less energy is needed for the $CO_2/O_2$ separation and the hydrogen pressurization unit as the starting pressure for these unit operations is higher than ambient pressure.

In one alternative, not shown in the drawings, a portion of the first spent aqueous scrubbing liquid is fed to the vessel 400 and a second portion is fed directly to the anode chamber 313 of the electrolytic cell 310.

The compressor unit, and gas separator 340 or according to the alternative embodiment the second compressor/separator 395 may be in flow connection with the inlet portion of the anode chamber. This means that the inlet portion operates as a mixing zone for the spent scrubbing liquid and the secondary compressed and cooled secondary stream S2, or S2', of off gas. The mixing zone may be realized by the secondary gas being injected into the stream or feed of spent scrubbing liquid just prior to the introduction into the anode chamber, where the oxygen from the off gas is also vented.

The mixing, or mixing zone, may also be directly after the first spent aqueous scrubbing liquid has left the scrubber.

With reference to **Fig. 2**, the scrubber arrangement 200 has a scrubber 210 with an inlet 211' for receiving alkaline, aqueous scrubbing liquid from a first buffer tank (not shown), and an outlet 211" for withdrawing spent aqueous scrubbing liquid and feeding it to the inlet 313' for the spent aqueous scrubbing liquid of the anode chamber 313.

In accordance with the description of Fig. 1, flue gas enters the scrubber 210 via the scrubber inlet 213. The scrubbing is then performed in two stages. The first stage takes place in a first absorber and the second stage takes place in the second absorber. The scrubbing is performed in a counter flow manner, with the second absorber arranged downstream of the first absorber.

If the scrubber arrangement 200 is arranged separately from the regeneration arrangement 300, such as in a vehicle, also the regeneration arrangement 300, such as a charging station or vehicle depot, may comprise a third buffer tank and a fourth buffer tank not shown in the figures.

Now turning to the regeneration arrangement 300. Other than the electrolytic cell 310 and its components, which have been previously described in relation to **Fig. 1**, the regeneration arrangement 300 further comprises a compressor unit 320 for compressing hydrogen gas withdrawn from the cathode chamber 312. Moreover, the regeneration arrangement 300 further comprises a first compressor unit 330 for compressing oxygen and carbon dioxide withdrawn from the anode chamber. Furthermore, the regeneration arrangement 300 also comprises a gas separator (not shown) for separating oxygen $O_2$ and carbon dioxide $CO_2$ withdrawn from the anode chamber 313 from liquid. This gas separator 340 is arranged upstream of the compressor unit 330.

In one alternative embodiment a second compression unit (and separator unit) 395 is arranged upstream of the gas separator 340, this is shown as a dashed arrow. This second compression unit 395 may also be in fluid connection with a stream of the first spend aqueous scrubbing liquid. To further describe the relationship between the scrubber arrangement 200 and the regeneration arrangement 300, the following description is provided. The regenerated alkaline, aqueous scrubbing liquid withdrawn from the cathode chamber 312 of the electrolytic cell 310 is fed as an alkaline, aqueous scrubbing liquid to the scrubber arrangement. The scrubbing process may comprise several scrubbing steps, and regenerated scrubbing liquid may be fed into one or more of these steps.

The pH of the first alkaline, aqueous spent scrubbing liquid is conventionally about 8 to 11. By adding the secondary stream S2 into the spent scrubbing liquid the carbon load of the liquid is increased. This may lead to a decrease in the pH level, where the decrease may be slight.

It is to be noted that the electrolytic cell may be sensitive to impurities in the fluid flowing through the anode and cathode chambers. Hence, there may also be a separate cleaning unit (not shown), which serves to remove impurities such as for instance nitrogen oxides NOx and sulfur oxides SOx from the spent aqueous scrubbing liquid before it enters the electrolytic cell 310. As an example, the cleaning unit may include a filter to remove particulate matter.

It should be noted that in all Figs 1-2, the direction of the arrows corresponds to the direction of flow of the fluids circulating in the system 100. Further, the lines of the arrows indicate a fluid or flow communication between the elements of the system.

*Chemical processes*

The chemical processes occurring in the system 100 may be divided into two different parts, namely carbon capture and electrochemical regeneration, respectively. The overall reaction electrochemically splits water to oxygen and hydrogen according to the following formula:

$$2 \times H_2O \rightarrow O_2 + 2 \times H_2$$

The chemical reactions have been balanced for the overall process of capturing $4 \times CO_2$ molecules.

*The scrubber*

In short, carbon is captured in the scrubber 210 by dissolving carbon dioxide in the alkaline, aqueous scrubbing liquid. This reaction takes place automatically in accordance with the following formula:

$$4 \times OH^- + 4 \times CO_2 \rightarrow 4\ HCO_3^-$$

The solvent is then regenerated in the regeneration arrangement 300 using electrochemistry. In general, the electrochemical reaction can be split into two parts; the anode reaction and the cathode reaction. These reactions will be described below.

*The anode*

In the anode chamber 313, $O_2$ and $CO_2$ is generated in two different steps. First, $O_2$ is generated at the anode together with 4 $H^+$. Then, the $H^+$ decreases the pH-value of the solvent and releases $CO_2$. Simultaneously, $O_2$ is generated at the anode and the two gases are mixed in a ratio of 4:1, $CO_2$ to $O_2$. The overall reaction at the anode chamber 313 is:

$$4 \times HCO_3^- \rightarrow O_2 + 4 \times CO_2 + 2 \times H_2O + 4\ e^-$$

The reaction at the anode is:

$$2 \times H_2O \rightarrow O_2 + 4 \times H^+ + 4\ e^-$$

This reaction decreases the pH-value locally. This decrease in pH-value pushes the $HCO_3$-/$CO_2$ equilibrium to the right, such that:

$$4 \times H^+ + 4 \times HCO_3^- \rightarrow 4 \times CO_2 + 4 \times H_2O$$

which results in the release of gaseous $CO_2$ from the solvent.

*The cathode*

At the cathode, $H_2$ is produced together with $OH^-$. This reaction both generates valuable $H_2$ for downstream applications and regenerates the alkaline solvent comprising hydroxide ions ($OH^-$) for the carbon capture process. The cathode chamber reaction 312 is:

$$4 \times H_2O + 4\ ^- \rightarrow 2 \times H_2 + 4 \times OH^-.$$

*Scrubbing liquid*

Ethanolamine (MEA) is an amine used for carbon capture used in conventional scrubbers. It has been suggested that MEA may act as a promoter for the process of scrubbing for instance flue gas. MEA indeed is known to capture

$CO_2$ faster than a hydroxide solution. An envisaged idea has therefore been to combine the carbon capture capabilities of MEA with the electrochemical properties of the hydroxide solution. However, experimental tests have indicated that MEA unfortunately behaves undesirably in an electrochemical cell. MEA appears to be reduced at the cathode, which would reduce the carbon capturing capabilities of the solvent, which is highly unwanted. Thus, using a metal hydroxide, e.g. potassium or sodium hydroxide, is preferred in the system 100 disclosed herein.

*Power need*

The electrochemical reaction in the electrolytic cell 310 requires electrical power. The actual power consumption will depend on the technical implementation of the process of the system 100. Assuming 100 % efficiency, the minimum current required for the process can be calculated using Faraday's law of thermodynamics: $I = mFz/tM$. With the parameters as listed in **Table 1** below, the current can be calculated.

**Table 1** - parameters for calculating the minimum current required for the process

| Symbol | Quantity | Value |
|---|---|---|
| ***m*** | Mass of $O_2$ | 182 kg |
| ***F*** | Faraday's constant | 96485 C/mol |
| ***z*** | Valency number of electrons | 2 |
| ***t*** | Time | 1 s |
| ***M*** | Molar mass of $O_2$ | 32 g/mol |

The current can thus be calculated to $I = 1.09 \times 10^9$ A. With a minimum voltage of 2 V assumed, the theoretical minimum power consumption for 1 ton of $CO_2$ will be:

$$P_{min} = 2\ V \times 1.09 \times 10^9\ A = 2.18 \times 109\ J = 2.18\ GJ.$$

For real chemical reactions, a higher energy consumption is expected. As suggested by a model based on experiments the ultimate power consumption for the capture of $CO_2$ and regeneration of the solvent is predicted to 5.88 GJ per 1 ton of $CO_2$. This process regenerates the solvent, produces $H_2$ at the cathode 312 and a mixture of $CO_2$ and $O_2$ at the anode.

Further energy is required for the separation of the $CO_2$ and $O_2$ from the first gas separator 340. This separation may for instance be done cryogenically. Energy consumption for $CO_2$ cryogenically separated from $CH_4$ has been studied in the literature for biogas purposes. For cryogenic separation, CH4 and $O_2$ have similar physio-chemical properties, as the $CO_2$ is removed by cooling. The energy consumption for separation of $O_2$ and $CO_2$ in the first gas separator 340 is expected to be 1.4 $\pm$ 0.4 MJ per kg $CO_2$.

$CO_2$ and $H_2$ is typically produced in a ratio of 2:1. If the downstream application is methanol production, the suitable stoichiometric ratio is 1:3 and additional H2 is required for this process. Commercial electrolysis equipment produces $H_2$ with an energy consumption of 55 kWh/kg. For 1 ton of $CO_2$, the $H_2$ requirements are therefore $(m_{CO2}M_{CO2}) \times 3$ = 68182 mol, which equals: 68182 mol $\times$ 2 g/mol $\times$ 55 kWh/kg = 7500 kWh = 26.98 GJ. The carbon capture regeneration process produced $H_2$ corresponding to 4.5 GJ, and the remaining energy requirements for $H_2$ production is therefore: 26.98 GJ - 4.50 GJ = 22.48 GJ.

The power consumption of the carbon capture process is determined primarily by the electrochemical cell. The purification of $CO_2$ requires additional energy. The energy consumption for compressing $CO_2$ is needed in all carbon capture plants, as the $CO_2$ needs to be liquefied for transport off site. Table 2 below is an example showing compression of $CO_2$ in pure form as base case (that means 1 bar starting pressure) compared to compression of the $CO_2/O_2$ mixture at 1 bar and 3 bar starting pressures. The table shows that already at 3 bar starting pressure, the energy consumption for liquefying the captured $CO_2$ is similar to the base case. Operating the electrolyser unit above 3 bar pressure, will give an advantage for the liquefaction of the $CO_2$ compared to the base case.

**Table 2** - Power consumption for $CO_2$ compression

| Example | Conditions | Feed gas composition | | | Liquid CO2 out | | Off gas | | | Comp pressure | Power Consumption, kW | | | Power consumption per kg CO2 |
|---|---|---|---|---|---|---|---|---|---|---|---|---|---|---|
| | | kg CO2/h | kg O2/h | Total, kg/h | kg/h | | kg/h | % CO2 | kg CO2/h | bar | CO2 Comp, 3 stage | Cooling comp | Total kW | kW/kg CO2 |
| Pure CO2 | 100 kg/h @100% CO2, 1 bar | 100 | 0 | 100 | 100 | | 0 | 0 | 0 | 45 | 11,6 | 8,1 | 19,7 | 0,197 |
| 80%, 1 bar | 125 kg/h @ 80%, 1 bar | 100 | 25 | 125 | 94,5 | | 30,5 | 18 | 5,5 | 45 | 16,3 | 9,1 | 25,4 | 0,269 |
| 80%, 3 bar | 125 kg/h @ 80%, 3 bar | 100 | 25 | 125 | 94,5 | | 30,5 | 18 | 5,5 | 45 | 11,2 | 7,8 | 19 | 0,201 |

EXPERIMENTAL SECTION

*Example 1*

In the following, a $CO_2$ capture from a power plant generating 10 MW heat and power from biomass is presented in relation to three process steps; "scrubber", "regeneration" and "separation", see **Table 3**. Overall, the process requires a large amount of electrical energy. This is positive, as electrification of the carbon capture process is highly wanted and completely new. Some of the energy may be recovered as heat for district heating.

**Table 2** - 10 MW power plant CO2 capture

| **Process** | **Scrubber** | **Regeneration** | **Separation** |
|---|---|---|---|
| **In** | • Gas with -10% $CO_2$ 2 ton $CO_2$/h<br>• Lean liquid 400 $m^3$/h | • Saturated liquid 400 $m^3$/h<br>• Power 3.2 MW | • Gas: 80% $CO_2$ and 20% $O_2$ 2 ton/h $CO_2$<br>• Power 0.76 MW |
| **Out** | • Gas without $CO_2$<br>• Saturated liquid 400 $m^3$/h | • Lean liquid 400 $m^3$/h<br>• Gas: $H_2$ 45 kg/h<br>• Gas: 80% $CO_2$ and 20% $O_2$<br>2 ton/h $CO_2$ | • Gas: pure $CO_2$ 2 ton/h $CO_2$ |
| **Operation** | Automatic process | Uses power | Uses power |

*Example 2*

To verify the applicability of the process using the system 100 as described herein, laboratory tests have been performed.

In the laboratory tests, a standard electrolysis cell from EC Electrocell, model Electro MP Cell was used. The electrolysis cell was provided with a Nafion 117 membrane. In operating the cell, a 1,5 M $KHCO_3$ solution was circulated over the anode side from a combined degassing/circulation tank. The liquid was circulated at 1.5 Umin. Similarly, a 1.5 M KOH solution was circulated over the cathode side from a combined degassing/circulation tank. The liquid was circulated at 1.5 L/min. Standard flowmeters and lab pumps were used. Gas flow from the degassing tanks were measured by an Aalborg GFM gas flow meter. $CO_2$ content were measured using a Guardian NG from Edinburgh Sensors. A standard heat plate was used to keep a constant temperature of the liquid at 40 degrees Celsius during the experiments. The pH and temperature were measured in the circulation tanks using standard online pH and temperature meters. The current density applied to the electrolyzer were varied between 1-4 kA/$m^2$, using a standard power converter.

## Claims

**1.** A method of scrubbing a gas, comprising carbon dioxide to deplete the gas of carbon dioxide ($CO_2$), the method comprising the steps of:

- scrubbing the gas in a scrubber (210) with a first alkaline, aqueous scrubbing liquid to dissolve carbon dioxide ($CO_2$) as hydrogen carbonate ($HCO_3^-$) and/or as carbonate ($CO_3^{2-}$) in the first alkaline, aqueous scrubbing liquid, thereby providing a first spent aqueous scrubbing liquid comprising hydrogen carbonate ($HCO_3^-$) and/or carbonate ($CO_3^{2-}$),
- feeding the first spent aqueous scrubbing liquid to an electrolytic cell (310) comprising an anode chamber (313) and a cathode chamber (312);
- regenerating the first spent aqueous scrubbing liquid in the electrolytic cell (310) by electrolysis, depleting the first spent aqueous scrubbing liquid of hydrogen carbonate ($HCO_3^-$) and of carbonate ($CO_3^{2-}$) in the anode chamber (313, the regeneration further comprising generating gaseous hydrogen in the cathode chamber (312) and a gaseous mixture of oxygen and carbon dioxide ($CO_2$) in the anode chamber (313) by electrolysis; and
- withdrawing regenerated alkaline, aqueous scrubbing liquid from the cathode chamber (312) and re-circulating it to the scrubber (210);
- wherein carbon dioxide ($CO_2$) and/or oxygen ($O_2$) withdrawn from the anode chamber (313) is compressed into liquid carbon dioxide and compressed oxygen ($O_2$), in a compression unit (330),

**characterized in that**

the method further comprises a step of separating the liquid carbon dioxide from gaseous oxygen, in a gas separator (340), into a first stream (S1) comprising carbon dioxide, and
a secondary stream (S2) comprising oxygen containing less than 30% carbon dioxide, wherein said secondary stream (S2) is introduced into at least a portion of said first spent aqueous scrubbing liquid, prior to feeding said first spent aqueous scrubbing liquid into the anode chamber of the electrolytic cell (310).

**2.** The method according to claim 1, wherein said gas to be depleted of carbon dioxide is any one of a flue gas, exhaustive gas or ambient air.

**3.** The method according to claim 1, wherein the pH of the first spent aqueous liquid is in the range of 8 to 11 before the introduction of the second stream of gas and wherein said introduction increases a carbon load of said spent aqueous liquid by between 2 and 10 %, or by between 3 and 7 %, or by between 4 and 6%.

**4.** The method according to claim 1, wherein the first spent aqueous scrubbing liquid is separated into at least two streams after leaving said scrubber, and wherein said second stream of compressed gas (S2) comprising oxygen containing less than 30% carbon dioxide is introduced in at least one of these first spent aqueous scrubbing liquid streams, and wherein at least another first spent aqueous scrubbing liquid stream is fed directly into the electrolytic cell.

**5.** A system for scrubbing a gas, such as flue gas or exhaustive gas, comprising carbon dioxide to deplete the flue gas of carbon dioxide, the system comprising:

- a scrubber arrangement (200) for scrubbing a gas with an alkaline, aqueous scrubbing liquid to dissolve carbon dioxide as hydrogen carbonate ($HCO_3^-$) and/or as carbonate ($CO_3^{2-}$) in the alkaline, aqueous scrubbing liquid; and
- a regeneration arrangement (300) for regenerating spent aqueous scrubbing liquid by electrolysis, wherein:
- the scrubber arrangement comprises a scrubber (210), the scrubber having an inlet (213) for the gas to be scrubbed and an outlet (214) for gas depleted of carbon dioxide, the scrubber (210) further having an inlet (212') for receiving the alkaline, aqueous scrubbing liquid and an outlet (211") for withdrawing spent aqueous scrubbing liquid; and
- the regeneration arrangement comprises an electrolytic cell (310), comprising an anode chamber (313) and a cathode camber (312), the anode chamber (313) comprising an anode inlet (313') for receiving the spent aqueous scrubbing liquid and an anode outlet (313") for withdrawing oxygen and carbon dioxide, and the cathode chamber (312) comprising an outlet (312") for withdrawing regenerated aqueous scrubbing liquid and hydrogen;

wherein the outlet (211") for spent aqueous scrubbing liquid of the scrubber (210) is in flow communication with the inlet (313') for the spent aqueous scrubbing liquid of the anode chamber (313), and the outlet (312") for regenerated aqueous scrubbing liquid of the cathode chamber (312) is flow communication with the inlet (212') for the alkaline, aqueous scrubbing liquid of the scrubber (210), wherein said regeneration arrangement further comprises:

- a first compressor unit (330) for compressing oxygen and carbon dioxide withdrawn from the anode chamber (313),

**characterized in that**
the regeneration arrangement further comprises:

- a gas separator (340) for separating oxygen and carbon dioxide withdrawn from the anode chamber (313), into a first stream (S1) of liquefied carbon dioxide stream and a secondary stream (S2) comprising a compressed gaseous oxygen containing less than 30% carbon dioxide, wherein said gas separator (340) is in a flow connection with at least a portion of a spent aqueous scrubbing liquid.

**6.** The system according to claim 5, wherein the system further comprises a mixing zone for introducing said compressed second stream (S2) into said spent aqueous scrubbing liquid, prior to or simultaneously with, feeding said spent aqueous scrubbing liquid to said electrolytic cell (310).

**7.** The system according to any one of claims 5 or 6, wherein the system further comprises a second compressor unit (395) for further compressing at least a portion of the second stream (S2) of gaseous oxygen comprising less than 30% carbon dioxide.

8. The system according to claim 6, wherein said mixing zone comprises a vessel (400) adapted to be pressurized and is arranged between said outlet (211") for spent aqueous scrubbing liquid of the scrubber (210) and the inlet (313') for the spent aqueous scrubbing liquid of the anode chamber (313), wherein said vessel is in flow communication with said gas separator (340) for separating oxygen and carbon dioxide, and/or with said second compressor (395), and with said scrubber outlet and said anode inlet.

9. The system according to claim 6, wherein said mixing zone is arranged at the anode inlet (313'), wherein said gas separator (340) for separating oxygen and carbon dioxide, and/or said second compressor unit, further is in flow communication with said anode inlet (313').

10. A regeneration arrangement for regenerating a spent aqueous scrubbing liquid comprising hydrogen carbonate ($HCO_3^-$) and/or carbonate ($CO_3^{2-}$) used in electrolysis to provide alkaline, aqueous scrubbing liquid, the regeneration arrangement (300) comprising an electrolytic cell (310), comprising an anode chamber (313) and a cathode chamber (312) separated by a membrane (311), wherein the anode chamber (313) comprises an anode inlet (313') for receiving the spent aqueous scrubbing liquid and an anode outlet (313") for withdrawing oxygen and carbon dioxide, and the cathode chamber (312) comprises an outlet (312") for withdrawing regenerated aqueous scrubbing liquid and hydrogen; wherein said regeneration arrangement further comprises:

- a first compressor unit (330) for compressing oxygen and carbon dioxide withdrawn from the anode chamber (313),
- a gas separator (340) for separating oxygen and carbon dioxide withdrawn from the anode chamber (313), into a first stream (S1) of liquefied carbon dioxide and a secondary stream (S2) of gaseous oxygen containing less than 30% carbon dioxide

**characterized in that**
said gas separator (340) is in flow connection with a stream of said first spent aqueous scrubbing liquid.

11. The regeneration arrangement according to claim 10, further comprising a mixing zone for introducing said compressed secondary stream (S2) into said spent aqueous scrubbing liquid prior to or simultaneously with feeding said spent aqueous scrubbing liquid to said electrolytic cell (310).

12. The arrangement according to claim 11, further comprising a second compressor unit (395) for further compressing the secondary stream (S2) of comprising gaseous oxygen containing less than 30% carbon dioxide.

13. The arrangement according to claim 11, wherein said mixing zone comprises a vessel (400) adapted to be pressurized and is arranged between an outlet (211") for spent aqueous scrubbing liquid of the scrubber (210) and the inlet (313') for the spent aqueous scrubbing liquid of the anode chamber (313), wherein said vessel (400) is in flow communication with said gas separator (340) for separating oxygen and carbon dioxide, and/or said second compressor unit (395), and with said scrubber outlet and said anode inlet.

14. The arrangement according to claim 11, wherein said mixing zone is arranged at the inlet (313') of the anode chamber, and wherein said gas separator (340) for separating oxygen and carbon dioxide, and/or said second compressor unit (395) further is in flow communication with said anode inlet (313').

300
200
214
-
+
212'
312''
313''
210
312
313
211''
311
313'
213
100

*Fig. 1*

100
200
210
211'
211''
213
214
300
310
311
312
312'
312''
313
313'
313''
320
330
340
380
395
400
S
S1
S2
S2
S2'

*Fig. 2*

Europäisches Patentamt
European Patent Office
Office européen des brevets

# EUROPEAN SEARCH REPORT

Application Number
EP 22 16 6046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2014/272734 A1 (BRAUN ROBERT J [US] ET AL) 18 September 2014 (2014-09-18)<br>* see, in particular, figure 1; see also claims 1-20 as well as examples 1-2 and tables 1-2; * | 5-7, 9-12,14<br>1-14 | INV.<br>B01D53/14<br>B01D53/96 |
| Y | WO 2011/160446 A1 (LIU XUN [CN]; WU TAO [CN]) 29 December 2011 (2011-12-29)<br>* see, in particular, figure 1 * | 1-14 | |
| A | SHU QINGDIAN ET AL: "Electrochemical Regeneration of Spent Alkaline Absorbent from Direct Air Capture", ENVIRONMENTAL SCIENCE & TECHNOLOGY, vol. 54, no. 14, 25 June 2020 (2020-06-25), pages 8990-8998, XP55951158, US ISSN: 0013-936X, DOI: 10.1021/acs.est.0c01977 Retrieved from the Internet: URL:http://pubs.acs.org/doi/pdf/10.1021/acs.est.0c01977><br>* see, in particular, figure 1 * | 1-14 | TECHNICAL FIELDS SEARCHED (IPC)<br>B01D |
| A | LIU N ET AL: "Electrolytic Regeneration of Decarbonising Potassium Carbonate Solution", CHINESE JOURNAL OF CHEMICAL ENGINEERING, CHEMICAL INDUSTRY PRESS, BEIJING, CN, vol. 18, no. 4, 1 August 2010 (2010-08-01), pages 538-543, XP027254798, ISSN: 1004-9541 [retrieved on 2010-08-01]<br>* see, in particular, figures 2-11 * | 1-14 | |
| A | US 11 219 860 B1 (JAKOBSEN JAN STOUGAARD [DK]) 11 January 2022 (2022-01-11)<br>* see, in particular, figures 2 and 4 * | 1-14 | |
| | -/-- | | |

The present search report has been drawn up for all claims

| Place of search | Date of completion of the search | Examiner |
|---|---|---|
| Munich | 14 August 2022 | Rumbo, Angel |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 16 6046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JING-WEN MA ET AL: "Ditetraalkylammonium Amino Acid Ionic Liquids as CO 2 Absorbents of High Capacity", ENVIRONMENTAL SCIENCE & TECHNOLOGY, vol. 45, no. 24, 15 December 2011 (2011-12-15), pages 10627-10633, XP055128972, ISSN: 0013-936X, DOI: 10.1021/es201808e * see, in particular, figures 2-10 * ----- | 1-14 | |
| A | DE MEYER FRÉDÉRICK ET AL: "Selective Electrochemical Regeneration of Aqueous Amine Solutions to Capture CO2 and to Convert H2S into Hydrogen and Solid Sulfur", APPLIED SCIENCES, vol. 11, no. 21, 21 October 2021 (2021-10-21), page 9851, XP55951120, DOI: 10.3390/app11219851 * see, in particular,figure 2 * ----- | 1-14 | TECHNICAL FIELDS SEARCHED (IPC) |
| A | EP 2 737 937 A1 (ALSTOM TECHNOLOGY LTD [CH]) 4 June 2014 (2014-06-04) * see, in particular, figures 1,2 * ----- | 1-14 | |
| A | MICHAEL C. STERN ET AL: "Post-combustion carbon dioxide capture using electrochemically mediated amine regeneration", ENERGY & ENVIRONMENTAL SCIENCE, vol. 6, no. 8, 1 January 2013 (2013-01-01), pages 2505-2517, XP055589592, Cambridge ISSN: 1754-5692, DOI: 10.1039/c3ee41165f * see, in particular, figures 1,2,4 and 5 * ----- -/-- | 1-14 | |

The present search report has been drawn up for all claims

2

| Place of search | Date of completion of the search | Examiner |
|---|---|---|
| Munich | 14 August 2022 | Rumbo, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# EUROPEAN SEARCH REPORT

Application Number
EP 22 16 6046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Wang Miao ET AL: "CO 2 Capture Using Electrochemically Mediated Amine Regeneration", Industrial & engineering chemistry research, 15 April 2020 (2020-04-15), pages 1-27, XP55951127, DOI: 10.1021/acs.iecr.9b05307 Retrieved from the Internet: URL:https://www.osti.gov/servlets/purl/1646883 [retrieved on 2022-08-12] * see, in particular, figures 1-3 and table 1 * ----- | 1-14 | |

TECHNICAL FIELDS SEARCHED (IPC)

The present search report has been drawn up for all claims

| Place of search | Date of completion of the search | Examiner |
|---|---|---|
| Munich | 14 August 2022 | Rumbo, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 22 16 6046

This annex lists the patent family members relating to the patent documents cited in the above-mentioned European search report. The members are as contained in the European Patent Office EDP file on The European Patent Office is in no way liable for these particulars which are merely given for the purpose of information.

14-08-2022

| Patent document cited in search report | Publication date | Patent family member(s) | Publication date |
|---|---|---|---|
| US 2014272734 A1 | 18-09-2014 | NONE | |
| WO 2011160446 A1 | 29-12-2011 | CN 201746592 U | 16-02-2011 |
| | | JP 3185328 U | 15-08-2013 |
| | | WO 2011160446 A1 | 29-12-2011 |
| US 11219860 B1 | 11-01-2022 | EP 3995204 A1 | 11-05-2022 |
| | | US 11219860 B1 | 11-01-2022 |
| | | WO 2022096644 A1 | 12-05-2022 |
| EP 2737937 A1 | 04-06-2014 | AU 2013263793 A1 | 19-06-2014 |
| | | CA 2833889 A1 | 30-05-2014 |
| | | EP 2737937 A1 | 04-06-2014 |
| | | US 2014151240 A1 | 05-06-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11219860 A